(19) Europäisches Patentamt
European Patent Office
Office européen des brevets

(11) **EP 1 100 755 B1**

(12) **FASCICULE DE BREVET EUROPEEN**

(45) Date de publication et mention
de la délivrance du brevet:
**24.09.2014 Bulletin 2014/39**

(51) Int Cl.:
*C03C 3/087* (2006.01)      *C03C 4/02* (2006.01)
*C03C 4/08* (2006.01)

(21) Numéro de dépôt: **99938065.2**

(22) Date de dépôt: **26.07.1999**

(86) Numéro de dépôt international:
**PCT/BE1999/000094**

(87) Numéro de publication internationale:
**WO 2000/007952 (17.02.2000 Gazette 2000/07)**

(54) **VERRE SODO-CALCIQUE COLORE FONCE DE NUANCE VERTE A BLEU**

GRÜN-BLAU GEFÄRBTES NATRONKALKGLAS

DEEP COLOURED GREEN-TO-BLUE SHADE SODA-LIME GLASS

(84) Etats contractants désignés:
**AT BE CH CY DE DK ES FI FR GB GR IE IT LI LU
MC NL PT SE**

(30) Priorité: **31.07.1998 FR 9810020**

(43) Date de publication de la demande:
**23.05.2001 Bulletin 2001/21**

(73) Titulaire: **AGC Glass Europe
1348 Louvain-la-Neuve (BE)**

(72) Inventeurs:
• **COSTER, Dominique
B-5020 Temploux (BE)**
• **FOGUENNE, Marc
B-5081 Saint-Denis (BE)**

(74) Mandataire: **Bayot, Daisy et al
AGC Glass Europe
Technovation Centre
IP Department
Rue Louis Blériot, 12
6041 Gosselies (BE)**

(56) Documents cités:
EP-A- 0 536 049      EP-A- 0 803 479
EP-A- 0 816 296      EP-A- 0 825 156
EP-A- 0 831 071      DE-A- 19 636 303
US-A- 5 411 922

EP 1 100 755 B1

**Description**

La présente invention concerne un verre sodo-calcique coloré foncé de nuance verte à bleue composé de constituants principaux formateurs de verre et d'agents colorants.

L'expression "verre sodo-calcique" est utilisée ici dans le sens large et concerne tout verre qui contient les constituants suivants (pourcentages en poids):

| | |
|---|---|
| $Na_2O$ | 10 à 20% |
| CaO | 0 à 16% |
| $SiO_2$ | 60 à 75 % |
| $K_2O$ | 0 à 10% |
| MgO | 0 à 10% |
| $Al_2O_3$ | 0 à 5% |
| BaO | 0 à 2% |
| BaO + CaO + MgO | 10 à 20 % |
| $K_2O$ + $Na_2O$ | 10 à 20% |

Ce type de verre trouve un très large usage dans le domaine des vitrages pour le bâtiment ou l'automobile, par exemple. On le fabrique couramment sous forme de ruban par le procédé d'étirage ou de flottage. Un tel ruban peut être découpé sous forme de feuilles qui peuvent ensuite être bombées ou subir un traitement de renforcement des propriétés mécaniques, par exemple une trempe thermique.

Lorsqu'on parle des propriétés optiques d'une feuille de verre, il est en général nécessaire de rapporter ces propriétés à un illuminant standard. Dans la présente description, on utilise 2 illuminants standards. L'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

En fait, les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P, de la longueur d'onde dominante $\lambda_D$ de la lumière transmise, et du facteur de transmission lumineuse du verre (TLC5) sont calculées à partir des transmissions spécifiques internes spectrales $(TSI_\lambda)$ d'une feuille de verre de 5 mm d'épaisseur. La transmission spécifique interne spectrale d'une feuille de verre est régie uniquement par l'absorption du verre et peut être exprimée par la loi de Beer-Lambert:

$TSI_\lambda = e^{-E.A\lambda}$ où $A_\lambda$ est le coefficient d'absorption du verre (en cm$^{-1}$) à la longueur d'onde considérée et E l'épaisseur du verre (en cm). En première approximation, $TSI_\lambda$ peut également être représenté par la formule

$$(I_{3\lambda} + R_{2\lambda}) / (I_{1\lambda} - R_{1\lambda})$$

où $I_{1\lambda}$ est l'intensité de la lumière visible incidente à une première face de la feuille de verre, $R_{1\lambda}$ est l'intensité de la lumière visible réfléchie par cette face, $I_{3\lambda}$ est l'intensité de la lumière visible transmise à partir de la seconde face de la feuille de verre et $R_{2\lambda}$ est l'intensité de la lumière visible réfléchie vers l'intérieur de la feuille par cette seconde face.

Dans la description qui suit ainsi que dans les revendications, on utilise encore:

-    la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\Sigma\, T_{\lambda}.E_{\lambda}.S_{\lambda}\, /\, \Sigma\, E_{\lambda}.S_{\lambda}$ dans laquelle $T_{\lambda}$ est la transmission à la longueur d'onde $\lambda$, $E_{\lambda}$ est la distribution spectrale de l'illuminant A et $S_{\lambda}$ est la sensibilité de l'oeil humain normal en fonction de la longueur d'onde $\lambda$.
-    la transmission énergétique totale (TE), mesurée pour une épaisseur de 4 mm (TE4). Cette transmission totale est le résultat de l'intégration entre les longueurs d'onde 300 et 2150 nm de l'expression: $\Sigma\, T_{\lambda}.E_{\lambda}\, /\, \Sigma\, E_{\lambda}$ dans laquelle $E_{\lambda}$ est la distribution énergétique spectrale du soleil à 30° au dessus de l'horizon.
-    la sélectivité (SE), mesurée par le rapport de la transmission lumineuse totale pour l'illuminant A et de la transmission énergétique totale (TLA/TE).
-    la transmission totale dans l'ultraviolet, mesurée pour une épaisseur de 4 mm (TUV4). Cette transmission totale est le résultat de l'intégration entre 280 et 380 nm de l'expression: $\Sigma\, T_{\lambda}.U_{\lambda}\, /\, \Sigma\, U_{\lambda}$. dans laquelle $U_{\lambda}$ est la distribution spectrale du rayonnement ultraviolet ayant traversé l'atmosphère, déterminée dans la norme DIN 67507.

La présente invention concerne en particulier des verres colorés foncés de nuance verte à bleue. Ces verres sont généralement choisis pour leurs propriétés protectrices vis à vis du rayonnement solaire et leur emploi dans le bâtiment est connu. Ils sont utilisés en architecture ainsi que pour vitrer partiellement certains véhicules ou compartiments de chemin de fer.

La présente invention concerne un verre foncé de nuance verte à bleue hautement sélectif spécialement approprié pour entrer dans la composition de vitrages de voitures et en particulier de vitrages latéraux arrière et lunette arrière. Il est en effet important dans le domaine automobile que les vitrages de véhicules offrent une transmission lumineuse suffisante tout en présentant une transmission énergétique la plus faible possible afin d'éviter toute surchauffe de l'habitacle par temps ensoleillé. De tels vitrages peuvent être feuilletés et comprendre alors une ou plusieurs feuilles de verre selon l'invention.

L'invention fournit un verre sodo-calcique coloré composé de constituants principaux formateurs de verre et d'agents colorants, qui contient de 0.40 à 0.52 % en poids de FeO et présente sous illuminant A et pour une épaisseur de verre de 4 mm, une transmission lumineuse (TLA4) inférieure à 70 %, une sélectivité (SE4) supérieure à 1.65 et une transmission du rayonnement ultraviolet (TUV4) inférieure à 8 %.

La combinaison de ces propriétés optiques est particulièrement avantageuse en ce qu'elle offre, tout en assurant une transmission de la lumière à travers le verre suffisante pour les utilisations auxquelles il est destiné, une haute valeur de sélectivité et une faible valeur de transmission dans l'ultraviolet. Ceci permet à la fois d'éviter l'échauffement intérieur des volumes délimités par des vitrages selon l'invention, ce qui permet d'obtenir un gain d'énergie lorsque des systèmes de conditionnement d'air sont utilisés dans lesdits volumes, ainsi que la décoloration inesthétique des objets placés à l'intérieur de ces volumes, sous l'effet du rayonnement solaire ultraviolet.

De préférence, le verre selon l'invention possède une sélectivité (SE4) supérieure ou égale à 1.70, de préférence à 1.75. De telles valeurs de sélectivité permettent d'optimiser l'efficacité de filtration thermique d'un vitrage pour une transmission lumineuse donnée et dès lors d'améliorer le confort des espaces vitrés en limitant leur surchauffe lors d'un fort ensoleillement.

De préférence, le verre selon l'invention offre une transmission lumineuse supérieure à 15 %, de préférence à 20 % et inférieure à 50 %, de préférence à 45 %. Ces valeurs sont bien adaptées à l'utilisation du verre en tant que vitrage latéral arrière et lunettes arrière de véhicules.

Avantageusement, la longueur d'onde dominante du verre selon l'invention est inférieure à 550 nm, de préférence à 520 nm. Des verres d'une nuance respectant ces limites supérieures sont considérés comme esthétiques.

Il est préférable qu'un verre coloré selon l'invention offre une pureté de couleur en transmission (P) supérieure à 9 %, plus préférablement encore supérieure à 10 %. De telles valeurs de pureté donnent au verre un niveau de coloration apprécié dans les usages qui sont les siens.

Le fer est en fait présent dans la plupart des verres existant sur le marché, soit en tant qu'impureté, soit introduit délibérément en tant qu'agent colorant. La présence de $Fe^{3+}$ confère au verre une légère absorption de la lumière visible de faible longueur d'onde (410 et 440 nm) et une très forte bande d'absorption dans ultraviolet (bande d'absorption centrée sur 380 nm), tandis que la présence d'ions $Fe^{2+}$ provoque une forte absorption dans l'infrarouge (bande d'absorption centrée sur 1050 nm). Les ions ferriques donnent au verre une légère coloration jaune, tandis que les ions ferreux donnent une coloration bleu-vert plus prononcée. Toutes autres considérations restant égales, ce sont les ions $Fe^{2+}$ qui sont responsables de l'absorption dans le domaine infrarouge et qui conditionnent donc TE. La valeur de TE diminue, ce qui fait augmenter celle de SE, lorsque la concentration en $Fe^{2+}$ augmente. En favorisant la présence d'ions $Fe^{2+}$ vis à vis des ions $Fe^{3+}$, l'on obtient donc une sélectivité élevée.

De préférence, le verre selon l'invention comprend en tant qu'agent colorant en plus du fer, un au moins des éléments chrome, cobalt, vanadium, sélénium, titane, cérium et manganèse. L'ajout de quantités très faibles de ces éléments permet d'ajuster les propriétés optiques du verre de façon optimale et spécialement d'obtenir un verre hautement sélectif.

On peut produire du verre ayant à peu près une coloration similaire à celle du verre selon l'invention en utilisant notamment du nickel comme agent colorant. La présence de nickel présente cependant des inconvénients, spécialement lorsque le verre doit être produit par le procédé de flottage. Dans le procédé de flottage, un ruban de verre chaud est acheminé le long de la surface d'un bain d'étain fondu de sorte que ses faces soient planes et parallèles. Afin d'éviter l'oxydation de l'étain à la surface du bain, ce qui conduirait à l'entraînement d'oxyde d'étain par le ruban, on maintient une atmosphère réductrice au-dessus du bain. Lorsque le verre contient du nickel, celui-ci est partiellement réduit par l'atmosphère surmontant le bain d'étain donnant naissance à un voile dans le verre produit. Cet élément est également peu propice à l'obtention d'une valeur élevée de la sélectivité du verre qui le contient car il n'absorbe pas la lumière dans le domaine de l'infra-rouge ce qui conduit à une valeur de TE importante. De plus, le nickel présent dans le verre peut former du sulfure NiS. Ce sulfure existe sous diverses formes cristallines, stables dans des domaines de températures différents, et dont les transformations l'une en l'autre créent des problèmes lorsque le verre doit être renforcé par un traitement de trempe thermique, comme c'est le cas dans le domaine de l'automobile et aussi pour certains vitrages du bâtiment (balcons, allèges, ...). Le verre conforme à l'invention qui ne contient pas de nickel est donc particulièrement bien adapté à la fabrication par le procédé de flottage ainsi qu'à un usage architectural ou dans le domaine des véhicules automobiles ou autres.

Les effets des différents agents colorants envisagés individuellement, pour l'élaboration d'un verre sont les suivants (selon "Le Verre" de H. Scholze - traduit par J. Le Dû - Institut du Verre - Paris):

Cobalt: Le groupe $[Co^{II}O_4]$ produit une coloration bleu intense.

Chrome: La présence du groupe $[Cr^{III}O_6]$ donne naissance à des bandes d'absorption à 650 nm et donne une couleur vert clair. Une oxydation plus poussée donne naissance au groupe $[Cr^{IV}O_4]$ qui provoque une bande d'absorption très intense à 365 nm et donne une coloration jaune.

Vanadium: Pour des teneurs croissantes en oxydes alcalins, la couleur vire du vert à l'incolore, ce qui est provoqué par l'oxydation du groupe $[V^{III}O_6]$ en $[V^{V}O_4]$.

Sélénium: Le cation $Se^{4+}$ n'a pratiquement pas d'effet colorant, tandis que l'élément non chargé $Se^0$ donne une coloration rose. L'anion $Se^{2-}$ forme un chromophore avec les ions ferriques présents et confère de ce fait une couleur brun-rouge au verre.

Titane: Le $TiO_2$ introduit dans le verre en quantité suffisante permet d'obtenir par réduction $[Ti^{III}O_6]$ qui colore en violet ou $[Ti^{IV}O_4]$. Cette coloration peut virer aussi au marron.

Manganèse: Le groupe $[Mn^{III}O_6]$ dans les verres riches en alcalins crée une couleur violette.

Cérium: La présence des ions cérium dans la composition permet d'obtenir une forte absorption dans le domaine ultra violet. L'oxyde de cérium existe sous deux formes: $[Ce^{IV}]$ absorbe dans l'ultra violet autour de 240 nm et $[Ce^{III}]$ absorbe dans l'ultra violet autour de 314 nm.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet état.

Dans des formes préférées, le verre selon l'invention présente des propriétés optiques qui se situent dans les gammes définies ci-dessous:

$$20\ \% < TLA4 < 40\ \%$$

$$15\ \% < TE4 < 25\ \%$$

$$0\ \%\ <\ TUV4\ <\ 5\ \%$$

$$480\ nm\ <\ \lambda_D\ <\ 520\ nm$$

$$10\ \%\ <\ P\ <\ 20\ \%$$

La gamme de transmission lumineuse ainsi définie rend le verre selon l'invention particulièrement utile pour supprimer l'éblouissement par la lumière des phares d'automobiles lorsqu'il entre dans la composition de vitrages latéraux arrière ou comme lunette arrière de véhicules. La gamme de transmission énergétique correspondante assure au verre sa haute sélectivité. Quant aux gammes de longueurs d'ondes dominantes et de pureté d'excitation, elles correspondent à des nuances et une intensité de couleur particulièrement appréciées, spécialement selon les canons en vigueur en la matière actuellement dans les domaines architecturaux et automobiles.

Ces propriétés sont obtenues à partir des pourcentages en poids en agents colorants suivants, la quantité totale de fer étant exprimée sous forme de $Fe_2O_3$:

| | |
|---|---|
| $Fe_2O_3$ | 1.2 à 1.85% |
| FeO | 0.40 à 0.50 % |
| Co | 0.0020 à 0.0130 % |
| $Cr_2O_3$ | 0 à 0.0240 % |
| $V_2O_5$ | 0 à 0.1% |
| Se | 0 à 0.0015% |

L'utilisation du vanadium en tant qu'agent colorant offre l'avantage de limiter les coûts de production du verre selon l'invention de par le caractère peu onéreux de cet élément. D'autre part, le vanadium est également bénéfique à la protection de l'environnement par son caractère peu polluant et à l'obtention de la faible valeur de transmission du rayonnement ultraviolet du verre selon l'invention. Le vanadium présente également une forte absorption dans le domaine du rayonnement infrarouge, ce qui est propice à l'obtention d'un verre présentant une faible transmission énergétique et une haute sélectivité. Quant au chrome, son utilisation n'est pas défavorable à la préservation des parois réfractaires du four de fabrication du verre vis à vis desquelles ils ne présentent pas de risques de corrosion. L'utilisation du sélénium en tant qu'agent colorant permet d'obtenir un verre plus neutre, c'est à dire plus grisâtre, que ceux ne comprenant pas cet agent.

Selon des formes spécialement préférées, le verre selon l'invention présente des propriétés optiques situées dans les gammes suivantes:

$$25\ \%\ <\ TLA4\ <\ 35\%$$

$$15\ \%\ <\ TE4\ <\ 20\ \%$$

$$0\ \%\ <\ TUV4\ <\ 3.5\ \%$$

$$495\ nm\ <\ \lambda_D\ <\ 500\ nm$$

$$10\ \%\ <\ P\ <\ 15\ \%$$

Le verre présentant des propriétés optiques comprises dans les - gammes plus restreintes définies ci-dessus est particulièrement performant puisqu'il réunit des propriétés de transmission énergétique et lumineuse optimales pour être utilisé comme vitrages latéraux arrière et lunette arrière de véhicule. Dans son utilisation architecturale, il combine ses qualités esthétiques à une importante économie d'énergie liée à une moindre sollicitation des systèmes de conditionnement d'air. Dans les utilisations en question, il est préférable que le verre selon l'invention présente une TLA4 inférieure à 30 %, plus préférablement encore inférieure à 28 %.

De telles propriétés sont obtenues à partir des pourcentages en poids en agents colorants suivants, la quantité totale de fer étant exprimée sous forme de $Fe_2O_3$:

| | |
|---|---|
| $Fe_2O_3$ | 1.45 à 1.85 % |
| FeO | 0.40 à 0.45 % |
| Co | 0.0030 à 0.0120 % |
| $Cr_2O_3$ | 0.0190. à 0.0230 % |
| $V_2O_5$ | 0.0350 à 0.0550 % |
| Se | 0 à 0.0010 % |

Il est remarquable que des verres selon l'invention contenant du sélénium offrent une sélectivité supérieure ou égale à 1.65. Néanmoins, on préfère que le verre selon l'invention ne contienne pas cet agent colorant, qui est cher et s'incorpore dans le verre avec un faible rendement.

De préférence, le verre selon l'invention présente un pourcentage en poids de FeO supérieur à 0.42.

Le verre selon l'invention est utilisé de préférence sous forme de feuilles ayant une épaisseur de 3 ou 4 mm pour les vitres latérales arrière et la lunette arrière de véhicules et des épaisseurs de plus de 4 mm dans le bâtiment. Lorsque le verre selon l'invention entre dans la composition de vitrages feuilletés, il est utilisé de préférence selon des épaisseurs de l'ordre de 2 mm.

Le verre selon l'invention possède également de préférence, une transmission lumineuse totale sous illuminant C pour une épaisseur de 5 mm (TLC5) comprise entre 15 et 35 %, ce qui le rend propice à supprimer l'éblouissement par la lumière du soleil lorsqu'il est utilisé dans le bâtiment.

Le verre selon l'invention peut être revêtu d'une couche d'oxydes métalliques réduisant son échauffement par le rayonnement solaire et par conséquent celui de l'habitacle d'un véhicule d'une pièce d'un bâtiment utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée ou de composés contenant du fer réduit (FeO), le cobalt sous forme de sulfate hydraté, tel que $CoSO_4.7H_2O$ ou $CoSO_4.6H_2O$ ou d'oxydes, le chrome sous forme de bichromate tel que $K_2Cr_2O_7$. Quant au vanadium, on l'introduit sous forme d'oxyde ou de vanadate de sodium. Le cérium est introduit sous forme d'oxyde ou de carbonate. Le sélénium est ajouté sous forme élémentaire ou sous forme de sélénite tel que $Na_2SeO_3$ ou $ZnSeO_3$. Le titane est lui introduit sous forme de $TiO_2$ ou d'un oxyde mixte. Quant au manganèse, il est introduit sous forme d'oxyde ou de sel.

D'autres éléments sont parfois présents en tant qu'impuretés dans les matières premières utilisées pour fabriquer le verre selon l'invention, que ce soit dans les matières naturelles, dans le verre recyclé ou dans les scories, mais lorsque la présence de ces impuretés ne confère pas au verre des propriétés hors des limites définies ci-dessus, ces verres sont considérés comme conformes à la présente invention.

La présente invention sera illustrée par les exemples spécifiques de propriétés optiques et de compositions qui suivent.

## EXEMPLES 1 à 55

Le tableau I donne à titre indicatif et non limitatif la composition de base du verre ainsi que les constituants de la charge vitrifiable à fondre pour produire les verres selon l'invention. Les tableaux IIa et IIb donnent les propriétés optiques et les proportions en poids des agents colorants d'un verre comprenant ou non le sélénium parmi ses agents colorants. Ces proportions sont déterminées par fluorescence X du verre et converties en l'espèce moléculaire indiquée.

Le mélange vitrifiable peut, si nécessaire, contenir un agent réducteur tel que du coke, du graphite ou du laitier ou un agent oxydant tel que du nitrate. Dans ce cas, les proportions des autres matériaux sont adaptées afin que la composition du verre demeure inchangée.

### TABLEAU I

| Analyse du verre de base | Constituants du verre de base |
|---|---|
| | |

(suite)

| Analyse du verre de base | | Constituants du verre de base | |
|---|---|---|---|
| $SiO_2$ | 71.5 à 71.9 % | Sable | 571.3 |
| $Al_2O_3$ | 0.8 % | Feldspath | 29.6 |
| CaO | 8.8 % | Chaux | 35.7 |
| MgO | 4.2 % | Dolomie | 167.7 |
| $Na_2O$ | 14.1 % | $Na_2CO_3$ | 189.4 |
| $K_2O$ | 0.1 % | Sulfate | 5.0 |
| $SO_3$ | 0.05 à 0.45 % | | |

## TABLEAU IIa

| Ex | $Fe_2O_3$ (%) | FeO (%) | Co (ppm) | $V_2O_5$ (ppm) | $Cr_2O_3$ (ppm) | Se (ppm) | $\lambda_D^*$ (nm) | P (%) | TLA4 (%) | TE4 (%) | SE4 | TUV4 (%) |
|---|---|---|---|---|---|---|---|---|---|---|---|---|
| 1 | 1.80 | 0.49 | 31 | 261 | 20 | 2 | 505.4 | 9.5 | 34.0 | 18.4 | 1.85 | 0.9 |
| 2 | 1.70 | 0.44 | 61 | 51 | 34 | 3 | 495.3 | 12.0 | 35.1 | 19.4 | 1.80 | 1.2 |
| 3 | 1.81 | 0.45 | 58 | 10 | 237 | 9 | 526.3 | 8.4 | 30.3 | 15.8 | 1.92 | 2.0 |
| 4 | 1.67 | 0.45 | 75 | 950 | 124 | 5 | 505.3 | 8.7 | 29.9 | 16.7 | 1.79 | 0.6 |
| 5 | 1.71 | 0.43 | 81 | 354 | 9 | 3 | 494.0 | 12.7 | 31.8 | 18.3 | 1.74 | 1.2 |
| 6 | 1.58 | 0.42 | 67 | 519 | 168 | 14 | 528.6 | 7.2 | 31.4 | 18.4 | 1.71 | 2.1 |
| 7 | 1.68 | 0.42 | 78 | 215 | 7 | 12 | 500.2 | 7.2 | 30.7 | 18.3 | 1.68 | 1.7 |
| 8 | 1.42 | 0.41 | 78 | 7 | 241 | 8 | 494.0 | 13.1 | 31.9 | 18.3 | 1.74 | 5.0 |
| 9 | 1.55 | 0.43 | 82 | 910 | 78 | 3 | 495.0 | 13.3 | 30.0 | 17.1 | 1.76 | 1.5 |
| 10 | 1.47 | 0.41 | 69 | 257 | 175 | 9 | 498.4 | 9.6 | 32.6 | 18.5 | 1.76 | 3.7 |
| 11 | 1.63 | 0.41 | 75 | 497 | 15 | 12 | 502.4 | 6.9 | 29.5 | 17.2 | 1.71 | 1.4 |

## TABLEAU IIb

| Ex | $Fe_2O_3$ (%) | FeO (%) | Co (ppm) | $V_2O_5$ (ppm) | $Cr_2O_3$ (ppm) | $\lambda_D^*$ (nm) | P (%) | TLA4 (%) | TE4 (%) | SE4 | TUV4 (%) |
|---|---|---|---|---|---|---|---|---|---|---|---|
| 12 | 1.68 | 0.46 | 59 | 343 | 197 | 500.7 | 11.2 | 32.8 | 17.2 | 1.91 | 2.2 |
| 13 | 1.62 | 0.44 | 60 | 707 | 199 | 501.6 | 10.8 | 32.9 | 17.5 | 1.88 | 2.2 |
| 14 | 1.62 | 0.43 | 76 | 469 | 197 | 495.9 | 14.0 | 31.6 | 17.4 | 1.82 | 2.6 |
| 15 | 1.66 | 0.43 | 72 | 710 | 100 | 497.4 | 12.2 | 31.8 | 17.4 | 1.83 | 1.9 |
| 16 | 1.59 | 0.43 | 100 | 397 | 200 | 491.9 | 18.2 | 28.7 | 16.5 | 1.74 | 2.5 |
| 17 | 1.57 | 0.43 | 82 | 465 | 203 | 494.4 | 15.1 | 31.8 | 17.8 | 1.79 | 2.9 |
| 18 | 1.59 | 0.42 | 103 | 782 | 193 | 492.9 | 17.3 | 28.0 | 16.3 | 1.72 | 2.2 |
| 19 | 1.63 | 0.42 | 74 | 525 | 201 | 497.7 | 12.7 | 32.2 | 17.6 | 1.83 | 2.4 |
| 20 | 1.52 | 0.42 | 104 | 399 | 108 | 489.3 | 20.1 | 30.4 | 17.9 | 1.70 | 3.1 |
| 21 | 1.59 | 0.42 | 58 | 409 | 197 | 496.5 | 13.5 | 30.8 | 17.2 | 1.79 | 2.2 |
| 22 | 1.59 | 0.42 | 63 | 711 | 190 | 502.4 | 10.3 | 33.5 | 18.2 | 1.84 | 2.1 |

(suite)

| Ex | Fe$_2$O$_3$ (%) | FeO (%) | Co (ppm) | V$_2$O$_5$ (ppm) | Cr$_2$O$_3$ (ppm) | λ$_D$* (nm) | P (%) | TLA4 (%) | TE4 (%) | SE4 | TUV4 (%) |
|---|---|---|---|---|---|---|---|---|---|---|---|
| 23 | 1.66 | 0.41 | 102 | 623 | 199 | 494.3 | 15.6 | 28.4 | 16.6 | 1.72 | 1.9 |
| 24 | 1.83 | 0.50 | 122 | 307 | 137 | 495.9 | 14.2 | 22.1 | 12.2 | 1.81 | 0.5 |
| 25 | 1.71 | 0.48 | 60 | 510 | 150 | 499.9 | 11.6 | 31.5 | 15.9 | 1.98 | 1.6 |
| 26 | 1.51 | 0.42 | 80 | 462 | 292 | 496.5 | 14.3 | 31.3 | 17.4 | 1.80 | 3.1 |
| 27 | 1.64 | 0.42 | 92 | 426 | 295 | 496.4 | 14.5 | 29.2 | 16.5 | 1.77 | 2.2 |
| 28 | 1.57 | 0.42 | 72 | 469 | 204 | 496.6 | 13.1 | 33.4 | 18.4 | 1.81 | 2.8 |
| 29 | 1.63 | 0.41 | 84 | 497 | 202 | 495.9 | 14.0 | 31.0 | 17.4 | 1.79 | 2.3 |
| 30 | 1.56 | 0.40 | 62 | 329 | 204 | 498.3 | 11.7 | 35.5 | 19.4 | 1.83 | 3.0 |
| 31 | 1.51 | 0.42 | 80 | 462 | 205 | 494.4 | 15.3 | 32.1 | 17.9 | 1.80 | 1.7 |
| 32 | 1.64 | 0.42 | 92 | 426 | 210 | 494.2 | 15.4 | 29.9 | 17.0 | 1.76 | 1.6 |
| 33 | 1.80 | 0.47 | 60 | 260 | 6 | 496.2 | 12.2 | 32.8 | 17.1 | 1.92 | 1.8 |
| 34 | 1.78 | 0.49 | 82 | 0 | 102 | 492.4 | 16.9 | 29.8 | 15.7 | 1.90 | 2.3 |
| 35 | 1.79 | 0.48 | 109 | 516 | 200 | 493.9 | 17.2 | 25.2 | 13.8 | 1.83 | 1.6 |
| 36 | 1.69 | 0.49 | 86 | 261 | 206 | 494.3 | 16.4 | 28.4 | 14.9 | 1.91 | 2.3 |
| 37 | 1.68 | 0.48 | 103 | 576 | 101 | 490.9 | 19.8 | 26.0 | 14.4 | 1.81 | 1.9 |
| 38 | 1.59 | 0.49 | 63 | 431 | 36 | 492.8 | 15.9 | 32.5 | 16.9 | 1.92 | 2.7 |
| 39 | 1.53 | 0.47 | 36 | 75 | 213 | 501 | 10.9 | 36.3 | 18.1 | 2.01 | 3.2 |
| 40 | 1.39 | 0.45 | 108 | 750 | 114 | 488.2 | 22.8 | 30.0 | 17.3 | 1.73 | 4.4 |
| 41 | 1.23 | 0.48 | 88 | 0 | 109 | 486.5 | 25.5 | 33.8 | 18.6 | 1.82 | 7.7 |
| 42 | 1.22 | 0.49 | 61 | 455 | 15 | 487 | 23.1 | 36.7 | 19.6 | 1.87 | 7.2 |
| 43 | 1.42 | 0.44 | 46 | 65 | 238 | 496.4 | 13.1 | 37.4 | 19.4 | 1.93 | 1.9 |
| 44 | 1.77 | 0.47 | 96 | 931 | 218 | 498.1 | 14.0 | 24.5 | 13.3 | 1.84 | 1.8 |
| 45 | 1.63 | 0.46 | 86 | 178 | 9 | 489.7 | 18.4 | 32.4 | 18.2 | 1.78 | 1.8 |
| 46 | 1.78 | 0.48 | 62 | 813 | 236 | 508.8 | 9.84 | 28.9 | 14.5 | 1.99 | 2.0 |
| 47 | 1.58 | 0.45 | 95 | 247 | 5 | 488.2 | 21.2 | 30.8 | 17.4 | 1.77 | 1.8 |
| 48 | 1.78 | 0.48 | 105 | 878 | 24 | 492.1 | 17.9 | 24.8 | 13.8 | 1.80 | 1.8 |
| 49 | 1.41 | 0.48 | 41 | 950 | 15 | 494.7 | 12.9 | 38.2 | 20.6 | 1.85 | 1.9 |
| 50 | 1.42 | 0.45 | 79 | 0 | 109 | 490.0 | 17.7 | 36.0 | 20.6 | 1.75 | 1.7 |
| 51 | 1.41 | 0.49 | 102 | 852 | 164 | 489.1 | 22.9 | 28.1 | 16.1 | 1.75 | 1.7 |
| 52 | 1.39 | 0.48 | 92 | 750 | 54 | 488.4 | 21.8 | 31.6 | 17.2 | 1.84 | 1.8 |
| 53 | 1.70 | 0.49 | 59 | 190 | 97 | 495.4 | 13.5 | 34.0 | 17.9 | 1.90 | 1.9 |
| 54 | 1.75 | 0.435 | 48 | 0 | 5 | 495.4 | 11.5 | 38.5 | 22.0 | 1.75 | 1.8 |
| 55 | 1.68 | 0.43 | 44 | 879 | 35 | 506.9 | 8.1 | 36.8 | 20.0 | 1.84 | 1.8 |
| NB: * = exprimé en SI à 5 mm. ill. C | | | | | | | | | | | |

## Revendications

1. Verre sodo-calcique coloré ne contenant pas de nickel et composé de constituants principaux formateurs de verre et d'agents colorants, **caractérisé en ce qu'**il contient de 0.40 à 0.52 % en poids de FeO, présente sous illuminant A et pour une épaisseur de verre de 4 mm une transmission lumineuse (TLA4) inférieure à 70 %, une sélectivité (SE4) supérieure à 1.65 et une transmission du rayonnement ultraviolet (TUV4) inférieure à 8 %.

2. Verre coloré selon la revendication 1, **caractérisé en ce qu'**il présente une sélectivité (SE4) supérieure ou égale à 1.70, de préférence à 1.75.

3. Verre coloré selon l'une quelconque des revendications 1 ou 2, **caractérisé en ce qu'**il présente une transmission lumineuse supérieure à 15 %, de préférence à 20 % et inférieure à 50 %, de préférence à 45 %.

4. Verre coloré selon l'une quelconque des revendications 1 à 3, **caractérisé en ce qu'**il présente pour une épaisseur de verre de 5 mm une longueur d'onde dominante ($\lambda_D$) inférieure à 550 nm, de préférence inférieure à 520 nm.

5. Verre coloré selon l'une quelconque des revendications 1 à 4, **caractérisé en ce qu'**il présente une pureté (P) supérieure à 9 %, de préférence supérieure à 10 %.

6. Verre coloré selon l'une quelconque des revendications 1 à 4, **caractérisé en ce qu'**il contient en plus du Fe, un au moins des agents colorants Cr, Co, V, Se, Ti, Ce, Mn.

7. Verre coloré selon l'une quelconque des revendications 1 à 5, **caractérisé en ce qu'**il comprend les pourcentages en poids en agents colorants suivants, la quantité totale de fer étant exprimée sous forme de $Fe_2O_3$:

$Fe_2O_3$ 1.2 à 1.85 %
FeO 0.40 à 0.50%
Co 0.0020 à 0.0130 %
$Cr_2O_3$ 0 à 0.0240 %
$V_2O_5$ 0 à 0.1%
Se 0 à 0.0015 %
et **en ce qu'**il présente les propriétés optiques suivantes:

$$20\% < TLA4 < 40\,\%$$

$$15\,\% < TE4 < 25\,\%$$

$$0\% < TUV4 < 5\%$$

$$480\,nm < \lambda_D < 520\,nm$$

$$10\% < P < 20\%$$

8. Verre coloré selon l'une quelconque des revendications 1 à 6, **caractérisé en ce qu'**il présente les propriétés optiques suivantes:

$$25\,\% < TLA4 < 35\,\%$$

$$15\,\% < TE4 < 20\,\%$$

$$0\,\% < TUV4 < 3.5\,\%$$

$$495 \text{ nm} < \lambda_D < 500 \text{ nm}$$

$$10\% < P < 15 \%$$

**9.** Verre coloré selon la revendication 8 , **caractérisé en ce qu'**il présente une TLA4 inférieure à 30 %, de préférence inférieure à 28 %.

**10.** Verre coloré selon la revendication 9 ou 10, **caractérisé en ce qu'**il comprend les pourcentages en poids en agents colorants suivants, la quantité totale de fer étant exprimée sous forme de $Fe_2O_3$:

$Fe_2O_3$ 1.45 à 1.85 %
FeO 0.40 à 0.45 %
Co 0.0030 à 0.0120 %
$Cr_2O_3$ 0.0190. à 0.0230 %
$V_2O_5$ 0.0350 à 0.0550 %
Se 0 à 0.0010%

**11.** Verre coloré selon l'une quelconque des revendications 1 à 10, **caractérisé en ce que** son pourcentage en poids de FeO est supérieur à 0.42.

**12.** Verre coloré selon l'une quelconque des revendications 1 à 11, **caractérisé en ce qu'**il ne contient pas de Se parmi ses agents colorants.

**13.** Verre coloré selon l'une quelconque des revendications 1 à 12, **caractérisé en ce qu'**il présente pour une épaisseur de 5 mm une transmission lumineuse sous illuminant C (TLC5) comprise entre 15 et 35 %.

**14.** Verre coloré selon une quelconque des revendications 1 à 13, **caractérisé en ce qu'**il est revêtu d'une couche d'oxydes métalliques.

**15.** Verre coloré selon une quelconque des revendications 1 à 14, **caractérisé en ce qu'**il se présente sous forme de feuille.

**Patentansprüche**

**1.** Farbiges Natronkalkglas, welches kein Nickel enthält und aus glasbildenden Hauptbestandteilen und Färbemitteln zusammengesetzt ist, **dadurch gekennzeichnet, dass** es 0,40 bis 0,52 Gew.-% FeO enthält, bei Normbeleuchtung A und einer Glasdicke von 4 mm eine Lichttransmission (TLA4) kleiner als 70%, eine Selektivität (SE4) größer als 1,65 und eine Transmission von Ultraviolettstrahlung (TUV4) kleiner als 8% aufweist.

**2.** Farbiges Glas nach Anspruch 1, **dadurch gekennzeichnet, dass** es eine Selektivität (SE4) größer oder gleich 1,70, vorzugsweise größer oder gleich 1,75, aufweist.

**3.** Farbiges Glas nach einem der Ansprüche 1 oder 2, **dadurch gekennzeichnet, dass** es eine Lichttransmission größer als 15%, vorzugsweise größer als 20%, und kleiner als 50%, vorzugsweise kleiner als 45%, aufweist.

**4.** Farbiges Glas nach einem der Ansprüche 1 bis 3, **dadurch gekennzeichnet, dass** es bei einer Glasdicke von 5 mm eine dominante Wellenlänge ($\lambda_D$) kleiner als 550 nm, vorzugsweise kleiner als 520 nm, aufweist.

**5.** Farbiges Glas nach einem der Ansprüche 1 bis 4, **dadurch gekennzeichnet, dass** es eine Reinheit (P) größer als 9%, vorzugsweise größer als 10%, aufweist.

**6.** Farbiges Glas nach einem der Ansprüche 1 bis 4, **dadurch gekennzeichnet, dass** es zusätzlich zum Fe mindestens eines der Färbemittel Cr, Co, V, Se, Ti, Ce, Mn enthält.

7. Farbiges Glas nach einem der Ansprüche 1 bis 5, **dadurch gekennzeichnet, dass** es die folgenden Gewichtsprozentsätze an Färbemitteln umfasst, wobei die Gesamtmenge an Eisen in Form von $Fe_2O_3$ ausgedrückt ist:

$$Fe_2O_3 \quad 1,2 \text{ bis } 1,85\%$$
$$FeO \quad 0,40 \text{ bis } 0,50\%$$
$$Co \quad 0,0020 \text{ bis } 0,0130\%$$
$$Cr_2O_3 \quad 0 \text{ bis } 0,0240\%$$
$$V_2O_5 \quad 0 \text{ bis } 0,1\%$$
$$Se \quad 0 \text{ bis } 0,0015\%,$$

und dadurch, dass es die folgenden optischen Eigenschaften aufweist:

$$20\% < TLA4 < 40\%$$

$$15\% < TE4 < 25\%$$

$$0\% < TUV4 < 5\%$$

$$480 \text{ nm} < \lambda_D < 520 \text{ nm}$$

$$10\% < P < 20\%.$$

8. Farbiges Glas nach einem der Ansprüche 1 bis 6, **dadurch gekennzeichnet, dass** es die folgenden optischen Eigenschaften aufweist:

$$25\% < TLA4 < 35\%$$

$$15\% < TE4 < 20\%$$

$$0\% < TUV4 < 3,5\%$$

$$495 \text{ nm} < \lambda_D < 500 \text{ nm}$$

$$10\% < P < 15\%.$$

9. Farbiges Glas nach Anspruch 8, **dadurch gekennzeichnet, dass** es eine TLA4 kleiner als 30%, vorzugsweise kleiner als 28%, aufweist.

10. Farbiges Glas nach Anspruch 9 oder 10, **dadurch gekennzeichnet, dass** es die folgenden Gewichtsprozentsätze an Färbemitteln umfasst, wobei die Gesamt-menge an Eisen in Form von $Fe_2O_3$ ausgedrückt ist:

$$Fe_2O_3 \quad 1,45 \text{ bis } 1,85\%$$
$$FeO \quad 0,40 \text{ bis } 0,45\%$$
$$Co \quad 0,0030 \text{ bis } 0,0120\%$$

(fortgesetzt)

| | |
|---|---|
| $Cr_2O_3$ | 0,0190 bis 0,0230% |
| $V_2O_5$ | 0,0350 bis 0,0550% |
| Se | 0 bis 0,0010%. |

**11.** Farbiges Glas nach einem der Ansprüche 1 bis 10, **dadurch gekennzeichnet, dass** sein Gewichtsprozentsatz an FeO größer als 0,42 ist.

**12.** Farbiges Glas nach einem der Ansprüche 1 bis 11, **dadurch gekennzeichnet, dass** es unter seinen Färbemitteln kein Se enthält.

**13.** Farbiges Glas nach einem der Ansprüche 1 bis 12, **dadurch gekennzeichnet, dass** es bei einer Dicke von 5 mm und Normbeleuchtung C eine Lichttransmission (TLC5) von 15 bis 35% aufweist.

**14.** Farbiges Glas nach einem der Ansprüche 1 bis 13, **dadurch gekennzeichnet, dass** es mit einer Schicht aus Metalloxiden überzogen ist.

**15.** Farbiges Glas nach einem der Ansprüche 1 bis 14, **dadurch gekennzeichnet, dass** es in Plattenform vorliegt.


**Claims**

**1.** A colored soda-lime glass composed of glass-forming principal constituents and of coloring agents, **characterized in that** it contains from 0.40 to 0.52% by weight of FeO and has, under illuminant A and for a glass thickness of 4 mm, a light transmission (TLA4) of less than 70%, a selectivity (SE4) of greater than 1.65 and an ultraviolet radiation transmission (TUV4) of less than 8%.

**2.** The colored glass as claimed in claim 1, **characterized in that** it has a selectivity (SE4) of greater than or equal to 1.70, preferably greater than or equal to 1.75.

**3.** The colored glass as claimed in either of claims 1 and 2, **characterized in that** it has a light transmission of greater than 15%, preferably greater than 20%, and less than 50%, preferably less than 45%.

**4.** The colored glass as claimed in any one of claims 1 to 3, **characterized in that** it has, for a glass thickness of 5 mm, a dominant wavelength ($\lambda_D$) of less than 550 nm, preferably less than 520 nm.

**5.** The colored glass as claimed in any one of claims 1 to 4, **characterized in that** it has a purity (P) of greater than 9%, preferably greater than 10%.

**6.** The colored glass as claimed in any one of claims 1 to 4, **characterized in that** it contains, in addition to Fe, at least one of the coloring agents Cr, Co, V, Se, Ti, Ce, Mn.

**7.** The colored glass as claimed in any one of claims 1 to 5, **characterized in that** it comprises the following percentages by weight of coloring agents, the total amount of iron being expressed in the form of $Fe_2O_3$:

| | |
|---|---|
| $Fe_2O_3$ | 1.2 to 1.85% |
| FeO | 0.40 to 0.50% |
| Co | 0.0020 to 0.0130% |
| $Cr_2O_3$ | 0 to 0.0240% |
| $V_2O_5$ | 0 to 0.1% |
| Se | 0 to 0.0015%. |

and it that it has the following optical properties:

$$20\% < TLA4 < 40\%$$

$$15\% < TE4 < 25\%$$

$$0\% < TUV4 < 5\%$$

$$480\ nm < \lambda_D < 520\ nm$$

$$10\% < P < 20\%.$$

8. The colored glass as claimed in any one of claims 1 to 6, **characterized in that** it has the following optical properties:

$$25\% < TLA4 < 35\%$$

$$15\% < TE4 < 20\%$$

$$0\% < TUV4 < 3.5\%$$

$$495\ nm < \lambda_D < 500\ nm$$

$$10\% < P < 15\%.$$

9. The colored glass as claimed in claim 8, **characterized in that** it has a TLA4 of less than 30%, preferably less than 28%.

10. The colored glass as claimed in claim 8 or 9, **characterized in that** it comprises the following percentages by weight of coloring agents, the total amount of iron being expressed in the form of $Fe_2O_3$:

| | |
|---|---|
| $Fe_2O_3$ | 1.45 to 1.85% |
| FeO | 0.40 to 0.45% |
| Co | 0.0030 to 0.0120% |
| $Cr_2O_3$ | 0.0190 to 0.0230% |
| $V_2O_5$ | 0.0350 to 0.0550% |
| Se | 0 to 0.0010%. |

11. The colored glass as claimed in any one of claims 1 to 10, **characterized in that** its percentage by weight of FeO is greater than 0.42.

12. The colored glass as claimed in any one of claims 1 to 11, **characterized in that** it does not contain Se among its coloring agents.

13. The colored glass as claimed in any one of claims 1 to 12, **characterized in that** it has, for a thickness of 5 mm, a light transmission under illuminant C (TLC5) of between 15 and 35%.

**14.** The colored glass as claimed in any one of claims 1 to 13, **characterized in that** it is coated with a layer of metal oxides.

**15.** The colored glass as claimed in any one of claims 1 to 14, **characterized in that** it is in sheet form.